# EUROPEAN PATENT APPLICATION

(11) **EP 3 203 453 A1**
(43) Date of publication of application: **09.08.2017**
(21) Application number: 17154506.4
(22) Date of filing: 03.02.2017
(51) Int. Cl.: G07G 1/12, G06Q 20/20

(54) **CHECKOUT SYSTEM AND REGISTRATION APPARATUS**

(30) Priority: 04.02.2016 JP 2016019778
(71) Applicant: Toshiba TEC Kabushiki Kaisha, Tokyo 141-0032 (JP)
(72) Inventor: SUGITA, Nobuhiro, Shinagawa-ku, Tokyo 141-8562 (JP)
(74) Representative: Takeuchi, Maya

(57) **Abstract**

A registration apparatus generates settlement data required for settlement of a transaction on the basis of input data. The registration apparatus receives the settlement data transferred from another registration apparatus via a network. The registration apparatus sends the settlement data generated by a generation module to a settlement apparatus set as a sending destination. The registration apparatus sends the settlement data received by a registration side reception module to the settlement apparatus set as the sending destination. The registration apparatus sends the settlement data generated by the generation module to another registration apparatus set as a changed destination. The settlement apparatus executes a settlement processing on the basis of the settlement data received via the network.

## Description

### FIELD

The present invention relates to checking out technologies in general, e.g. for a retail store, and embodiments described herein relate in particular to a checkout system and a registration apparatus used in the checkout system, and a checkout method.

### BACKGROUND

As a checkout system for a retail store, there is a type of the system in which a registration apparatus for generating settlement data required for settlement of a transaction and a settlement apparatus for executing a settlement processing of the transaction on the basis of the settlement data in each transaction are separated. The registration apparatus waits for input of data relating to commodity sales. If the data relating to the commodity sales is input by an operator, the registration apparatus generates settlement data on the basis of the data relating to the commodity sales, and sends the settlement data to the settlement apparatus. The settlement apparatus waits for input of payment data for the settlement data. If the payment data is input by the operator, the settlement apparatus executes the settlement processing of the transaction on the basis of the settlement data and the payment data. Such a checkout system described above includes a two-person operation in which the registration apparatus and the settlement apparatus are respectively operated by different store clerks, and a sharing operation, a so-called semi-self-checkout system, in which the registration apparatus is operated by a store clerk and the settlement apparatus is operated by a customer.

In a case of the semi-self-checkout system, if a customer spends much time on the operation of the settlement apparatus, customers who wait for the settlement take patience. In order to avoid such a situation, a plurality of settlement apparatuses is connected with one registration apparatus. Then, the registration apparatus selects one of the settlement apparatuses in each transaction, and sends settlement data to the selected settlement apparatus.

To achieve the above end, there is provided a checkout system comprising:
a plurality of registration apparatuses including,
a generation module configured to generate settlement data required for settlement of a transaction on the basis of input data,
a registration side reception module configured to receive the settlement data transferred via the network from another registration apparatus,
a first sending module configured to send the settlement data generated by the generation module to a settlement apparatus set as a sending destination,
a second sending module configured to send the settlement data received by the registration side reception module to the settlement apparatus set as the sending destination, and
a third sending module configured to send the settlement data generated by the generation module to another registration apparatus set as a changed destination; and
a plurality of settlement apparatuses connected with the plurality of the registration apparatuses via a network, including,
a settlement side reception module configured to receive the settlement data transferred via the network, and
a processing module configured to execute a settlement processing on the basis of the settlement data received by the settlement side reception module.

Preferably, the plurality of the registration apparatuses sends the settlement data to another registration apparatus set as the changed destination by the third sending module if the settlement processing is not executed by the settlement apparatus on the settlement data sent by the first or second sending module.

Preferably still, the plurality of the registration apparatuses further includes a reception module configured to receive a selection input of whether to send the settlement data generated by the generation module to another registration apparatus, wherein
the settlement data is sent to another registration apparatus set as the changed destination by the third sending module if the reception module receives the selection input indicating the sending of the settlement data.

Preferably yet, the plurality of the settlement apparatuses further includes an acceptable notification module configured to notify the registration apparatus that the settlement processing is possible if the settlement processing of the settlement data received by the settlement side reception module is possible, and
the plurality of the registration apparatuses further includes a notification transfer module configured to transfer a notification to another registration apparatus serving as a sending source of the settlement data if receiving the notification after the settlement data is sent by the second sending module, and
an informing module configured to carry out an informing for guiding a customer to the settlement apparatus which carries out the notification if receiving the notification after the settlement data is sent by the first or third sending module.

The invention also relates to a registration apparatus, comprising:
a communication module connected with a network to which a plurality of settlement apparatuses for executing a settlement processing on the basis of settlement data is connected;
a generation module configured to generate settlement data required for settlement of a transaction on the basis of input data;
a reception module configured to receive the settlement data transferred from another registration apparatus connected with the network;
a first sending module configured to send the settlement data generated by the generation module to a settlement apparatus set as a sending destination;
a second sending module configured to send the settlement data received by the reception module to the settlement apparatus set as the sending destination; and
a third sending module configured to send the settlement data generated by the generation module to another registration apparatus set as a changed destination.

Suitably, the registration apparatuses sends the settlement data to another registration apparatus set as the changed destination by the third sending module if the settlement processing is not executed by the settlement apparatus on the settlement data sent by the first or second sending module.

Suitably still, the registration apparatuses further includes a reception module configured to receive a selection input of whether to send the settlement data generated by the generation module to another registration apparatus, wherein
the settlement data is sent to another registration apparatus set as the changed destination by the third sending module if the reception module receives the selection input indicating the sending of the settlement data.

Suitably yet, the plurality of the settlement apparatuses further includes an acceptable notification module configured to notify the registration apparatus that the settlement processing is possible if the settlement processing of the settlement data received by the settlement side reception module is possible, and
the registration apparatuses further includes a notification transfer module configured to transfer a notification to another registration apparatus serving as a sending source of the settlement data if receiving the notification after the settlement data is sent by the second sending module, and
an informing module configured to carry out an informing for guiding a customer to the settlement apparatus which carries out the notification if receiving the notification after the settlement data is sent by the first or third sending module.

The invention further concerns a method for performing a checkout, comprising the steps of:
- generating, by a generation module, settlement data required for settlement of a transaction on the basis of input data,
- receiving, by a registration side reception module, the settlement data transferred via the network from another registration apparatus,
- sending, by a first sending module, the settlement data generated by the generation module to a settlement apparatus set as a sending destination,
- sending, by a second sending module, the settlement data received by the registration side reception module to the settlement apparatus set as the sending destination, and
- sending, by a third sending module, the settlement data generated by the generation module to another registration apparatus set as a changed destination; and
- receiving, by a settlement side reception module, the settlement data transferred via the network, and
- executing, by a processing module, a settlement processing on the basis of the settlement data received by the settlement side reception module.

Preferably, the sending step comprises sending, by the plurality of the registration apparatuses, the settlement data to another registration apparatus set as the changed destination by the third sending module if the settlement processing is not executed by the settlement apparatus on the settlement data sent by the first or second sending module.

Preferably still, the receiving step comprises receiving, by a reception module, a selection input of whether to send the settlement data generated by the generation module to another registration apparatus, wherein
the settlement data is sent to another registration apparatus set as the changed destination by the third sending module if the reception module receives the selection input indicating the sending of the settlement data.

Preferably yet, the method further comprises a notifying step comprising,
- notifying, by an acceptable notification module, the registration apparatus that the settlement processing is possible if the settlement processing of the settlement data received by the settlement side reception module is possible, and
- transferring, by a notification transfer module, a notification to another registration apparatus serving as a sending source of the settlement data if receiving the notification after the settlement data is sent by the second sending module, and
- carrying out, by an informing module, an informing for guiding a customer to the settlement apparatus which carries out the notification if receiving the notification after the settlement data is sent by the first or third sending module.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram illustrating a checkout system according to an embodiment;
Fig. 2 is a block diagram illustrating main circuit arrangements of a registration apparatus and a settlement apparatus;
Fig. 3 is a flowchart illustrating main procedures of an information processing executed by a CPU of the registration apparatus.
Fig. 4 is a flowchart illustrating main procedures of a reception interruption processing executed by a CPU of the settlement apparatus;
Fig. 5 is a flowchart illustrating main procedures of a reception interruption processing executed by the CPU of the registration apparatus;
Fig. 6 is a schematic diagram illustrating an example of display of a registration screen;
Fig. 7 is a schematic diagram illustrating an example of display of a settlement confirmation screen;
Fig. 8 is a schematic diagram illustrating an example of the display of the settlement confirmation screen;
Fig. 9 is a schematic diagram illustrating an example of the display of the settlement confirmation screen; and
Fig. 10 is a schematic diagram illustrating an example of the display of the settlement confirmation screen.

### DETAILED DESCRIPTION

In accordance with an embodiment, a checkout system comprises a plurality of registration apparatuses and a plurality of settlement apparatuses connected with the plurality of the registration apparatuses via a network. The plurality of the registration apparatuses includes a generation module, a registration side reception module, a first sending module, a second sending module and a third sending module. The generation module generates settlement data required for settlement of a transaction on the basis of input data. The registration side reception module receives the settlement data transferred via the network from another registration apparatus. The first sending module sends the settlement data generated by the generation module to a settlement apparatus set as a sending destination. The second sending module sends the settlement data received by the registration side reception module to the settlement apparatus set as the sending destination. The third sending module sends the settlement data generated by the generation module to another registration apparatus set as a changed destination. The plurality of the settlement apparatuses includes a settlement side reception module and a processing module. The settlement side reception module receives the settlement data transferred via the network. The processing module executes a settlement processing on the basis of the settlement data received by the settlement side reception module.

Hereinafter, and embodiment is described with reference to the accompanying drawings.

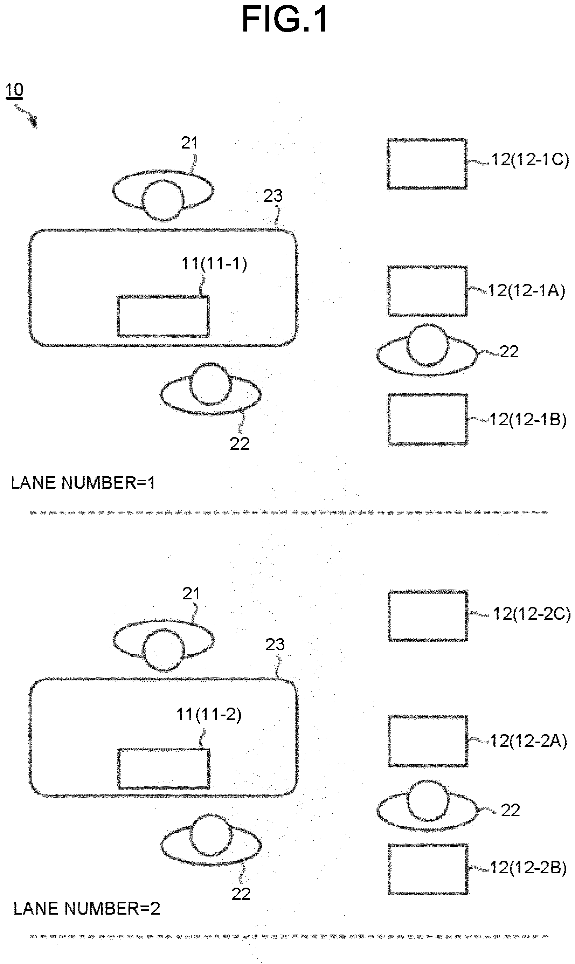

Fig. 1 is a schematic diagram illustrating a checkout system 10 according to the present embodiment. The checkout system 10 includes a plurality of registration apparatuses 11 and settlement apparatuses 12. The number of the settlement apparatuses 12 is more than that of the registration apparatuses 11.

The registration apparatus 11 and the settlement apparatus 12 are arranged in each checkout lane of a store. The number of the registration apparatuses 11 and the number of the settlement apparatuses 12 arranged in one checkout lane are not limited. In Fig. 1, a case in which one registration apparatus 11 and three settlement apparatuses 12 are arranged in each of two checkout lanes is illustrated. A unique number is assigned to each of the checkout lanes. In Fig. 1, a lane number "1" is assigned to the checkout lane at the upper side in the figure, and a lane number "2" is assigned to the checkout lane at the lower side in the figure. One registration apparatus 11 (11-1) and three settlement apparatuses 12 (12-1A, 12-1B and 12-1C) are arranged in the checkout lane of the lane number "1". One registration apparatus 11 (11-2) and three settlement apparatuses 12 (12-2A, 12-2B and 12-2C) are arranged in the checkout lane of the lane number "2".

The checkout system 10 is a semi-self-system. A store clerk 21, i.e., checker, is an operator of the registration apparatus 11. A customer 22 whose purchased commodity is registered by the registration apparatus 11 is an operator of the settlement apparatus 12.

The registration apparatus 11 is mounted on a working table 23 in Fig. 1. The working table 23 has a rectangular top plate. Passages (checkout lanes) for the customers 22 are formed by arranging a plurality of the working tables 23 in such a manner that the longitudinal directions of the top plates are arranged in parallel.

The registration apparatus 11 has functions including a sales registration processing of a commodity, creation of settlement data and transfer of the settlement data to the settlement apparatus 12. The sales registration processing of the commodity registers data of a commodity purchased by the customer 22 in the registration apparatus 11. For example, a barcode attached to a commodity is scanned with a scanner, and data of the commodity such as a sales quantity, a sales amount and the like is registered in the registration apparatus 11. The settlement data relates to settlement of commodities sales-registered as one transaction. A commodity code, a commodity name, a unit price, a sales quantity and a sales amount of a sales-registered commodity and a total quantity and a total amount of the commodity is included in the settlement data.

The registration apparatus 11 sets one of the three settlement apparatuses 12 arranged at the same checkout lane as a sending destination of the settlement data. Which settlement apparatus 12 is set as the sending destination is not predetermined. The registration apparatus 11 sends the settlement data to the one settlement apparatus 12 set as the sending destination. Further, the registration apparatus 11 sets a registration apparatus (another registration apparatus) 11 arranged at another checkout lane as a changed destination (another destination) of sending the settlement data. The registration apparatus 11 in any one of checkout lanes may be set as the changed destination. The registration apparatus 11 sends the settlement data to the one settlement apparatus 12 set as the sending destination or to another registration apparatus 11 set as the changed destination.

The settlement apparatus 12 has a function of the settlement processing. The settlement apparatus 12 processes the settlement of the transaction on the basis of the settlement data if receiving the settlement data from the registration apparatus 11. The settlement processing processes the settlement of the transaction, i.e., a commodity trading, on the basis of the settlement data. Settlement is carried out with cash, a credit card or electronic money.

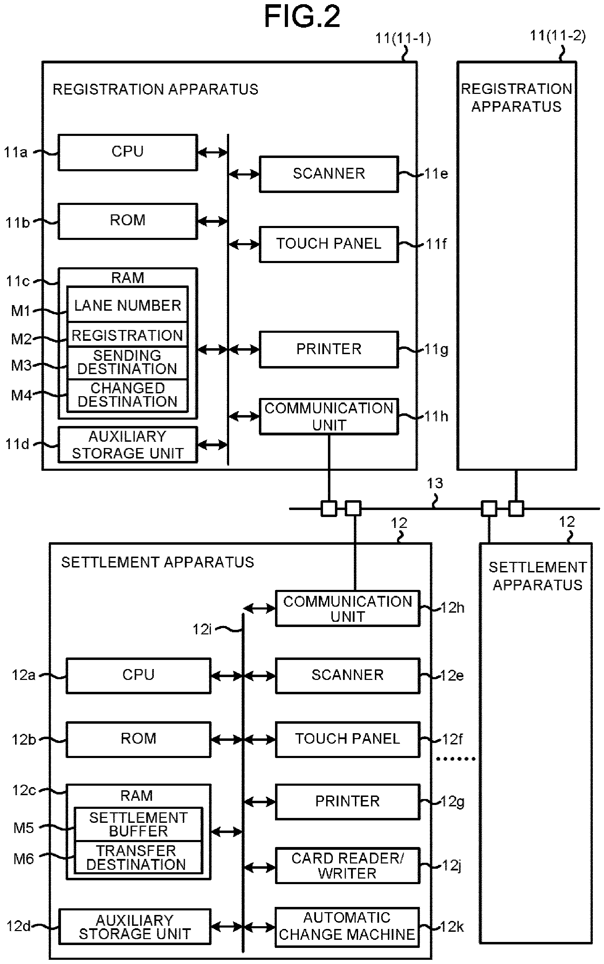

Fig. 2 is a block diagram illustrating main circuit arrangements of the registration apparatus 11 and the settlement apparatus 12. The registration apparatus 11 and the settlement apparatus 12 at each checkout lane both are connected with a LAN (local area network) 13 serving as an in-store network. A server (not shown) is connected with the LAN 13. The server stores a commodity database in which commodity information such as a commodity name, a unit price and the like is set in association with a commodity code of each commodity. The server may further store other databases.

The registration apparatus 11 and the settlement apparatus 12 transfer and receive information via the LAN 13. The network may also use another communication network such as an Internet or a wireless LAN instead of the LAN 13. Information such as settlement data may be transmitted and received between the registration apparatus 11 and the settlement apparatus 12 via the server. Further, the registration apparatus 11 and the settlement apparatus 12 in each checkout lane are connected via the communication network, and the registration apparatuses 11 between other checkout lanes may be connected via another communication network.

The registration apparatus 11 includes a CPU 11a, a ROM 11b, a RAM 11c, an auxiliary storage unit 11d, a scanner 11e, a touch panel 11f, a printer 11g, a communication unit 11h and a transmission system 11i.

The CPU 11a, the ROM 11b, the RAM 11c and the auxiliary storage unit 11d are connected via the transmission system 11i to constitute a computer. The CPU 11a acts as the main unit of the computer. The CPU 11a controls each section for realizing various functions as the registration apparatus 11 according to an operating system, middleware and an application program stored in the ROM 11b and the RAM 11c.

The ROM 11b acts as a main storage part of the computer. The ROM 11b stores the operating system. As occasion demands, the ROM 11b stores the middleware or the application program. Further, as occasion demands, the ROM 11b also stores data required to execute various processing by the CPU 11a. The RAM 11c acts as a main storage part of the computer. As occasion demands, the RAM 11c stores data required to execute various processing by the CPU 11a. Furthermore, the RAM 11c is used as a so-called working area for storing data temporarily used when the CPU 11a executes various processing. The auxiliary storage unit 11d acts as an auxiliary storage section of the computer. The auxiliary storage unit 11d stores data used by the CPU 11a which carries out various processing, or data created in the processing by the CPU 11a. As the auxiliary storage unit 11d, for example, an EEPROM, an HDD or an SSD can be used. The application program stored in the ROM 11b or the auxiliary storage unit 11d includes a control program described with respect to the information processing executed by the registration apparatus 11.

The scanner 11e reads a barcode attached to a commodity to acquire the commodity code of the commodity. The touch panel 11f includes a display device and a touch sensor. The touch panel 11f includes one for store clerk and one for customer. The touch panel 11f for store clerk is arranged on the working table 23 in such a manner that a display screen is oriented toward the working space of the store clerk 21. The touch panel 11f for customer is arranged on the working table 23 in such a manner that a display screen is oriented toward the passage for the customer 22. The printer 11g prints various character strings or images on a receipt paper to issue a receipt. The communication unit 11h is connected with the LAN 13. The communication unit 11h carries out data communication with the plurality of the settlement apparatuses 12 connected via the LAN 13. The communication unit 11h can also carry out the data communication with other registration apparatuses 11 via the LAN 13. The communication unit 11h acts as a communication module.

The transmission system 11i transmits data transmitted and received among the CPU 11a, the ROM 11b, the RAM 11c, the auxiliary storage unit 11d, the scanner 11e, the touch panel 11f, the printer 11g and the communication unit 11h. As the transmission system 11i, a well-known transmission system which includes various buses such as a system bus and the like and various interface circuits for connecting these buses with each section can be used. As hardware of such a registration apparatus 11, for example, an existing POS terminal can be used.

The settlement apparatus 12 includes a CPU 12a, a ROM 12b, a RAM 12c, an auxiliary storage unit 12d, a scanner 12e, a touch panel 12f, a printer 12g, a communication unit 12h, a card reader/writer 12j, an automatic change machine 12k and a transmission system 12i.

The card reader/writer 12i has a function of reading data recorded in a card and a function of writing data to the card. The card includes a card for settlement such as a credit card, a debit card, an electronic money card, a pre-paid card and the like. The automatic change machine 12k receives deposited coins and bills. Further, the automatic change machine 12k discharges coins and bills stored therein as change. The CPU 12a, the ROM 12b, the RAM 12c, the auxiliary storage unit 12d, the scanner 12e, the touch panel 12f, the printer 12g, the communication unit 12h and the transmission system 12i have the same functions as the registration apparatus 11. The CPU 12a is connected with the ROM 12b, the RAM 12c and the auxiliary storage unit 12d via the transmission system 12i to constitute a computer. The CPU 12a controls each section for realizing various functions as the settlement apparatus 12 according to an operating system, middleware and an application program stored in the ROM 12b and the RAM 12c. The application program stored in the ROM 12b or the auxiliary storage unit 12d includes a control program described with respect to an information processing executed by the settlement apparatus 12. As hardware of such a settlement apparatus 12, a POS terminal supporting, for example, an existing self-checkout system can be used.

The checkout system 10 with such an arrangement forms data memory areas M1∼M4 on the RAM 11c of the registration apparatus 11. The data memory area M1 stores the lane number. The lane number indicating the checkout lane in which this registration apparatus 11 is arranged is set in the auxiliary storage unit 11d of the registration apparatus 11. The CPU 11a of the registration apparatus 11 acquires the lane number from the auxiliary storage unit 11d and writes the acquired lane number to the data memory area M1, for example, at the time of startup of the system. Hereinafter, the data memory area M1 is referred to as a lane number memory M1.

The data memory area M2 stores the commodity code, the commodity name, the unit price, the sales quantity and the sales amount of each commodity sales-registered as one transaction. The commodity code is a unique code for individually identifying each commodity. The commodity code uniquely represented by, for example, the barcode is attached to each commodity, and the registration apparatus 11 can acquire the commodity code by scanning the barcode with the scanner 11e. The commodity name and the unit price are the name and the price per unit of the commodity identified by the corresponding commodity code. Hereinafter, the data memory area M2 is referred to as a registration memory M2.

The data memory area M3 stores sending destination information. The sending destination information identifies a settlement apparatus 12 which serves as the sending destination of the settlement data. One of the plurality of the settlement apparatuses 12 arranged at the same checkout lane as the registration apparatus 11 serves as the sending destination of the settlement data. The sending destination information capable of identifying the settlement apparatus 12 which serves as the sending destination of the settlement data is set in the auxiliary storage unit 11d of the registration apparatus 11. The CPU 11a acquires the foregoing sending destination information from the auxiliary storage unit 11d and writes the acquired sending destination information to the data memory area M3, for example, at the time of the startup of the system. A unique ID is preset in each settlement apparatus 12. The ID can be used as the sending destination information. Alternatively, a number, a symbol or a code is assigned in association with the ID of each settlement apparatus 12, and may be set as the sending destination information. Hereinafter, the data memory area M3 is referred to as a sending destination memory M3.

The data memory area M4 stores changed destination information. The changed destination information identifies another registration apparatus 11 which serves as the changed destination of sending the settlement data, instead of the original sending destination. One of registration apparatuses 11 arranged in other checkout lanes different from the checkout lane in which this registration apparatus 11 is arranged serves as the changed destination. The changed destination information capable of identifying a registration apparatus 11 serving as the changed destination is set in the auxiliary storage unit 11d of the registration apparatus 11. The CPU 11a acquires the foregoing changed destination information from the auxiliary storage unit 11d, and writes the acquired changed destination information to the data memory area M4, for example, at the time of the startup of the system. A unique ID is preset in each registration apparatus 11. The ID can be used as the changed destination information. Alternatively, a number, a symbol or a code is assigned in association with the ID of each registration apparatus 11, and may be set as the changed destination information. Hereinafter, the data memory area M4 is referred to as a changed destination memory M4.

The checkout system 10 forms data memory areas M5 and M6 on the RAM 12c of the settlement apparatus 12. The data memory area M5 stores the settlement data. If the settlement processing of the settlement data is possible, the CPU 12a of the settlement apparatus 12 stores this settlement data in the data memory area M5. Hereinafter, the data memory area M5 is referred to as a settlement buffer M5.

The data memory area M6 stores transfer destination information. The transfer destination information identifies another settlement apparatus 12 which serves as the transfer destination of the settlement data. One of other settlement apparatuses 12 arranged at the same checkout lane is set as the transfer destination of the settlement data from the settlement apparatus 12. For example, a default value of the transfer destination information capable of identifying the settlement apparatus 12 set as the transfer destination is stored in the auxiliary storage unit 12d, and the CPU 12a writes the default value to the data memory area M4 at the time of the startup. A unique ID is preset in each settlement apparatus 12. The ID can be used as the transfer destination information. Alternatively, a number, a symbol or a code is assigned in association with the ID of each settlement apparatus 12, and may be set as the transfer destination information. Hereinafter, the data memory area M6 is referred to as a transfer destination memory M6.

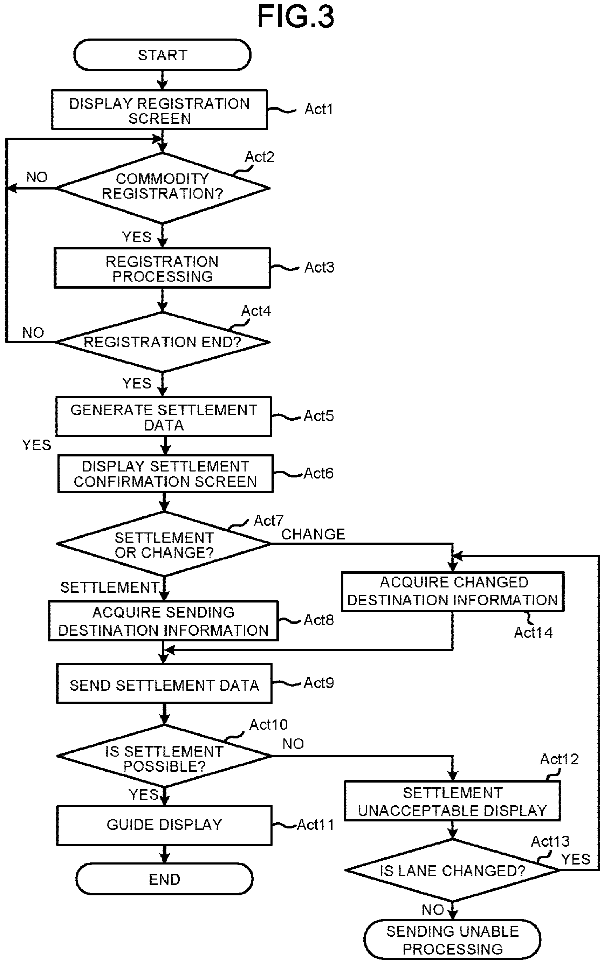

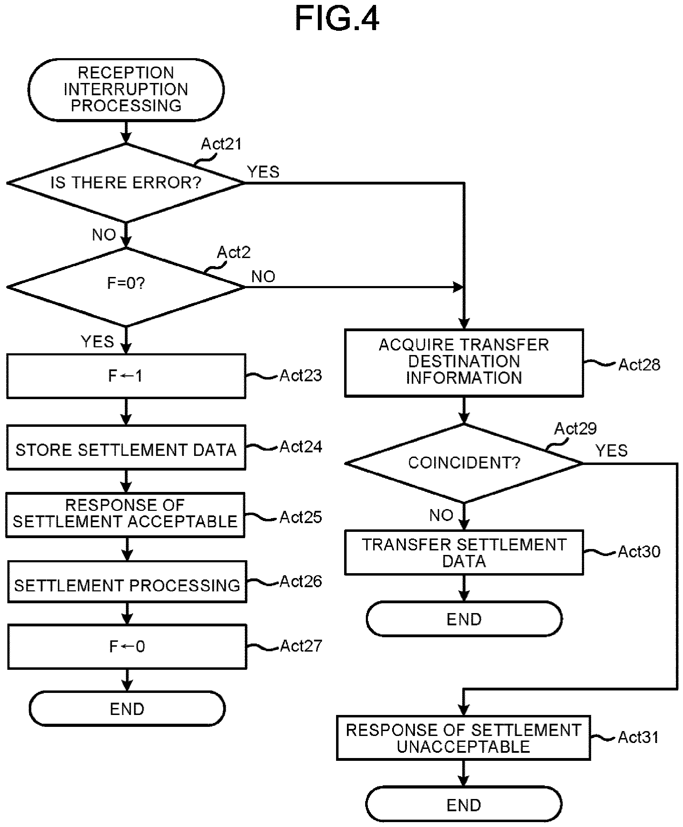

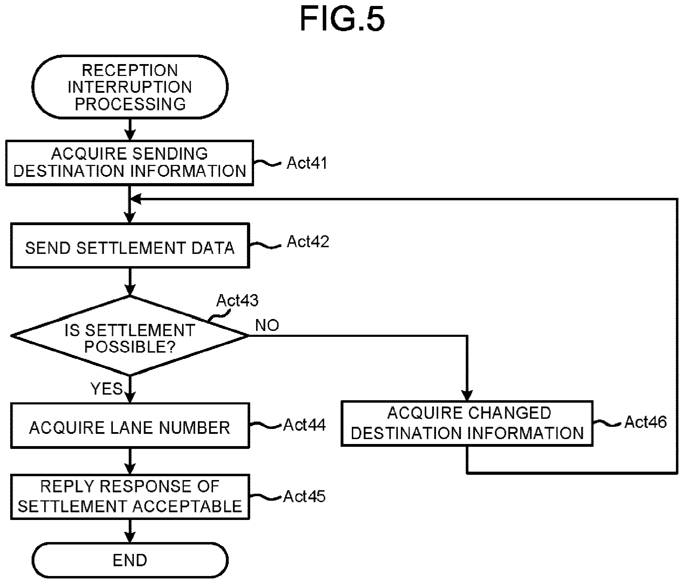

Fig. 3 is a flowchart illustrating main procedures of an information processing executed by the CPU 11a of the registration apparatus 11 according to the control program. Fig. 4 is a flowchart illustrating main procedures of an information processing executed by the CPU 12a of the settlement apparatus 12 at the time of the reception of the settlement data transferred via the LAN 13. Fig. 5 is a flowchart illustrating main procedures of an information processing executed by the CPU 11a of the registration apparatus 11 at the time of the reception of the settlement data transferred from another registration apparatus 11 via the LAN 13.

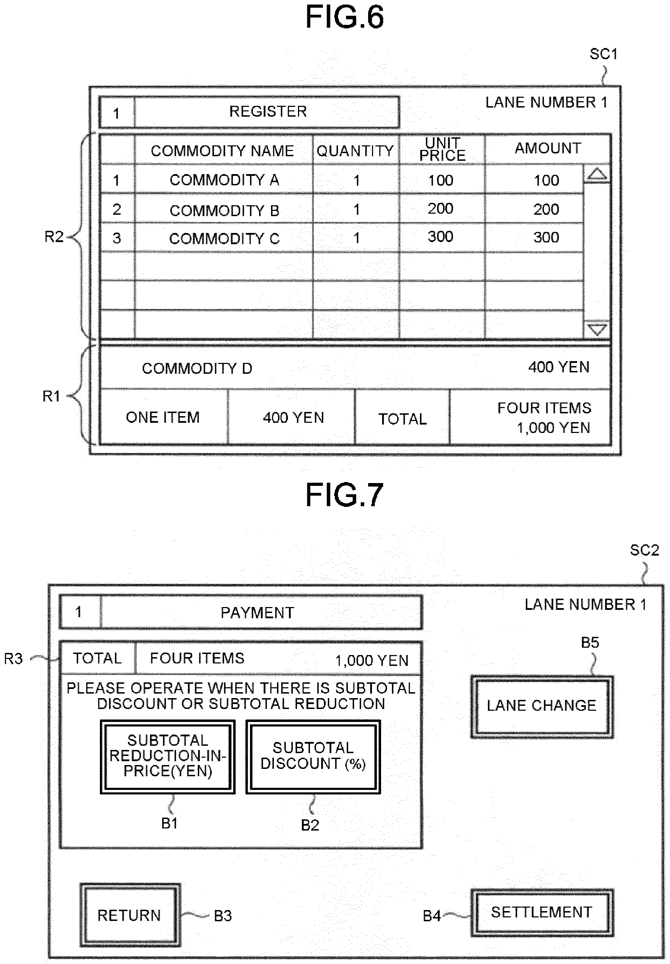

Fig. 6 to Fig. 9 are plan views illustrating examples of screens displayed on the touch panel 11f of the registration apparatus 11. Hereinafter, operations of the checkout system 10 are described with reference to Fig. 3 to Fig. 9. Furthermore, the contents of the processing described below are one example, and various processing capable of achieving the same result can be suitably utilized.

Firstly, the operations of the registration apparatus 11 are described.

If the registration apparatus 11 is activated in a mode of carrying out the registration processing of the purchased commodity, the CPU 11a starts the information processing indicated by the procedures shown in the flowchart in Fig. 3. This processing is carried out in accordance with the control program stored in the ROM 11b or the auxiliary storage unit 11d.

Firstly, the CPU 11a displays a registration screen SC1 (refer to Fig. 6) on a part of the touch panel 11f (Act 1).

The registration screen SC1 displays contents of the registration memory M2, and enables the store clerk 21 to confirm an implementation status of the registration processing. An example of the registration screen SC1 is shown in Fig. 6. The registration screen SC1 includes display areas R1 and R2. The display area R1 displays the commodity name, the unit price, the sales quantity (number of items) and the sales amount relating to the commodity most newly sales-registered, and the total quantity and the total amount of the purchased commodity after the commodity is registered. The display area R2 displays a list of the commodity name, the unit price, the sales quantity (number of items) and the sales amount of the commodity sales-registered prior to the commodity shown in the display area R1.

The CPU 11a displays various function buttons (not shown) such as a commodity button for the store clerk 21 to designate a commodity and a subtotal button in an area outside the area of the registration screen SC1 of the touch panel 11f.

If confirming the registration screen SC1 displayed on the touch panel 11f, the store clerk 21 recognizes that the sales registration of the purchased commodity can be executed right now. Then, if the customer 22 comes to the working table 23, carrying the purchased commodities, the store clerk 21 operates, for example, the scanner 11e or the commodity button to sequentially input the commodity codes of the purchased commodities. If the input of all the commodity codes of the purchased commodities is completed, the store clerk 21 touches the subtotal button. Through the foregoing operations, the sales registration of the commodities purchased by one customer is ended.

The CPU 11a of the registration apparatus 11 executes the following information processing for such sales registration operation. Firstly, the CPU 11a waits for the commodity registration (Act 2). If the commodity code is input with the scanner 11e or the commodity button (YES in Act 2), the CPU 11a executes the registration processing of the commodity sales data (Act 3). The CPU 11a acquires the commodity information such as the commodity name, the unit price and the like set in the commodity database in association with the commodity code. Further, the CPU 11a multiplies the sales quantity by the unit price to calculate the sales amount corresponding to the sales quantity. If the sales quantity is input through a numeric keypad before the commodity code is input, the sales quantity is an input numerical value, or the sales quantity is being set to "1" (default value), otherwise. In this way, the CPU 11a creates the commodity sales data including the commodity code, the commodity name, the unit price, the sales quantity and the sales amount. Then, the CPU 11a stores the commodity sales data in the registration memory M2. At this time, the CPU 11a updates the registration screen SC1 on the basis of the data in the registration memory M2.

The CPU 11a confirms whether or not the end of the registration of the sold commodities is declared (Act 4). For example, The CPU 11a determines that the end of the registration is declared if the subtotal button is touched. If the end of the registration is not declared (NO in Act 4), the CPU 11a returns to the processing in Act 2 to wait for the commodity registration. If the end of the registration is declared (YES in Act 4), the CPU 11a generates the settlement data on the basis of the data in the registration memory M1 (Act 5). The CPU 11a acts as a generation module for generating the settlement data required for the settlement of the transaction on the basis of the input data (data relating to commodity sales) through the processing in Act 2 to Act 5.

If the settlement data is generated, the CPU 11a displays a settlement confirmation screen SC2 (refer to Fig. 7) on a part of the touch panel 11f (Act 6).

An example of the settlement confirmation screen SC2 is shown in Fig. 7. The settlement confirmation screen SC2 includes a display area R3 and buttons B1, B2, B3, B4 and B5. The display area R3 displays the total quantity and the total amount of the commodities stored in the registration memory M2. The buttons B1 and B2 refer to a subtotal reduction-in-price button B1 and a subtotal discount button B2 used by the store clerk 21 to designate that a reduction-in-price or discount is applied to the total amount. The button B3 refers to a return button B3 used y the store clerk 21 to designate that a part of the area of the screen of the touch panel 11f returns to the registration screen SC1. The button B4 refers to a settlement button B4 used by the store clerk 21 to instruct the end of the registration of the commodities relating to one transaction and the transition to the settlement. The button B5 refers to a lane change button B5 used by the store clerk 21 to instruct that the settlement apparatus 12 serving as the sending destination of the settlement data is set as a settlement apparatus 12 arranged at the other checkout lane but not the same checkout lane (the settlement apparatus 12-2A, 12-2B or 12-2C in the case of the registration apparatus 11-1, or the settlement apparatus 12-1A, 12-1B or 12-1C in the case of the registration apparatus 11-2). The store clerk 21 who confirms the settlement confirmation screen SC2 touches the settlement button B4 or the lane change button B5. Normally, the store clerk 21 touches the settlement button B4. However, for example, in a case in which the store clerk 21 visually confirms that all the settlement apparatuses 12, e.g., 12-1A, 12-1B and 12-1C, arranged at the same checkout lane as the registration apparatus, e.g., 11-1, on which the store clerk 21 operates cannot carry out the settlement processing, or in a case in which the customer 22 tells the store clerk 21 that he or she wants to carry out the settlement at the other checkout lane, the store clerk 21 touches the lane change button B5.

The CPU 11a which displays the settlement confirmation screen SC2 waits for the touch on the settlement button B4 or the lane change button B5 (Act 7). If the buttons B1∼B3 other than the settlement button B4 or the lane change button B5 are touched, the CPU 11a executes a processing corresponding to the touched button.

In the processing in Act 7, if it is detected that the lane change button B5 is touched ("change" in Act 7), the CPU 11a proceeds to a processing in Act 14 described later. If it is detected that the settlement button B4 is touched ("settlement" in Act 7), the CPU 11a acquires the sending destination information stored in the sending destination memory M3 (Act 8). Then, the CPU 11a outputs the settlement data generated in the processing in Act 5 and the sending destination information acquired in the processing in Act 8 to the communication unit 11h (Act 9). Then, the CPU 11a instructs the communication unit 11h to send the settlement data and the sending destination information to the settlement apparatus 12, set as an address, identified by the sending destination information. In response to the instruction described above, a data transmission message of which the sending destination address is filled with the communication address of the settlement apparatus 12 identified by the sending destination information is created in the communication unit 11h to send it to the LAN 13. In the data transmission message, the settlement data and the sending destination information are included. A sending source address of the data transmission message is the communication address of the registration apparatus 11. The data transmission message is received by one settlement apparatus of which the communication address is set as the sending destination address in the plurality of the settlement apparatuses 12 connected with the LAN 13. In other words, the communication unit 12h of the settlement apparatus 12 receives a data transmission message of which the sending destination address is the communication address of the settlement apparatus 12 among the data transmission messages transmitted on the LAN 13. The CPU 11a of the registration apparatus 11 acts as a first sending module for sending the settlement data to the settlement apparatus 12 set as the sending destination in cooperation with the communication unit 11h through the processing in Act 8 and Act 9. Further, the CPU 12a of the settlement apparatus 12 acts as a settlement side reception module for receiving the settlement data transferred via the network (LAN 13) in cooperation with the communication unit 12h.

The CPU 12a of the settlement apparatus 12 starts the information processing indicated in the procedures shown in the flowchart in Fig. 4 if receiving the data transmission message via the communication unit 12h. This processing is realized in accordance with the control program stored in the ROM 12b or the auxiliary storage unit 12d.

Firstly, the CPU 12a confirms whether or not an error occurs (Act 21). The error includes a no-stored-change error when no money for change is stored in the automatic change machine 12k. Further, the error also includes a no-paper error when receipt paper is run out in the printer 12g. The content of the error is not limited in particular. For example, a state of a change-near-end indicating that stored money for change is less than a predetermined amount or a state of a paper-near-end indicating that the residual quantity of the receipt paper is less than a predetermined amount may be also certified as the error.

If no error occurs (NO in Act 21), the CPU 12a determines whether or not a busy flag F is reset to "0" (Act 22). The busy flag is information represented with one bit which is reset to "0" while the settlement apparatus 12 does not execute the settlement processing, and set to "1" until the settlement processing is ended if started. The busy flag F is stored in, for example, the RAM 12c.

If the busy flag F is reset to "0" (YES in Act 22), the CPU 12a sets the busy flag F to "1" (Act 23). The CPU 12a stores the settlement data included in the data transmission message in the settlement buffer M5 (Act 24). Furthermore, the CPU 12a instructs the communication unit 12h to send a response command informing that settlement is acceptable to the address of the registration apparatus 11 of the data transmission message sending source (Act 25). In response to the instruction described above, the response command, informing that settlement is acceptable, of which the sending destination address is filled with the sending source address of the data transmission message received via the LAN 13 is created in the communication unit 11h to send it on the LAN 13.

The sending source address of the response command is the communication address of the settlement apparatus 12. The response command is received by the registration apparatus 11 of which the communication address is set as the sending destination address. Thus, the CPU 12a acts as an acceptance notification module for notifying the registration apparatus 11 that the settlement processing can be executed if the settlement processing of the settlement data received by the settlement side reception module is possible through the processing in Act 21 to Act 25.

The CPU 12a of the settlement apparatus 12, which sends the response command informing that the settlement can be carried out, executes the settlement processing of the transaction on the basis of the settlement data stored in the settlement buffer M3 (Act 26). The settlement processing settles the transaction indicated by the settlement data in response to the operation by the customer 22, and is the same as that carried out by an existing self-checkout POS terminal, and thus the detailed description thereof is omitted. If the settlement processing is ended, the CPU 12a resets the busy flag F to "0" (Act 27). The CPU 12a acts as a processing module for executing the settlement processing on the basis of the settlement data received by the settlement side reception module through the processing in Act 26

On the other hand, if error occurs (YES in Act 21), or the busy flag F is set to "1" (NO in Act 22), the CPU 12a acquires the transfer destination information stored in the transfer destination memory M6 (Act 28). Then, the CPU 11a confirms whether or not this transfer destination information is coincident with the sending destination information included in the data transmission message (Act 29).

If the transfer destination information is not coincident with the sending destination information (NO in Act 29), the CPU 12a outputs the settlement data and the sending destination information included in the data transmission message to the communication unit 12h (Act 30). Then, the CPU 12a instructs the communication unit 12h to transfer the data transmission message of which the address is set to another settlement apparatus 12 identified by the transfer destination information. In response to the instruction described above, a data transmission message of which the sending destination address is changed to the communication address of the settlement apparatus 12 identified by the transfer destination information is created in the communication unit 12h, to send it to the LAN 13. This data transmission message is received by one settlement apparatus of which the communication address is set as the sending destination address in the plurality of the settlement apparatuses 12 connected with the LAN 13. In other words, the communication unit 12h of the settlement apparatus 12 receives a data transmission message of which the sending destination address is the communication address of the settlement apparatus 12 in the data transmission messages transmitted on the LAN 13.

If the transfer destination information is coincident with the sending destination information (YES in Act 29), the CPU 12a instructs the communication unit 12h to send a response command informing that settlement is not acceptable to an address of the registration apparatus 11 serving as the data transmission message sending source (Act 31). In response to the instruction described above, the response command, informing that settlement is not acceptable, of which the sending destination address is filled with the sending source address of the data transmission message received via the LAN 13 is created in the communication unit 12h to send it to the LAN 13. The sending source address of the response command is the communication address of the settlement apparatus 12. This response command is received by the registration apparatus 11 of which the communication address is set as the sending destination address.

The CPU 11a of the registration apparatus 11 which sends the settlement data in the processing in Act 9 of Fig. 3, waits for the response command (Act 10). If receiving the response command informing that settlement is acceptable via the communication unit 11h (YES in Act 10), the CPU 11a performs a guide display on the settlement confirmation screen SC2 (Act 11).

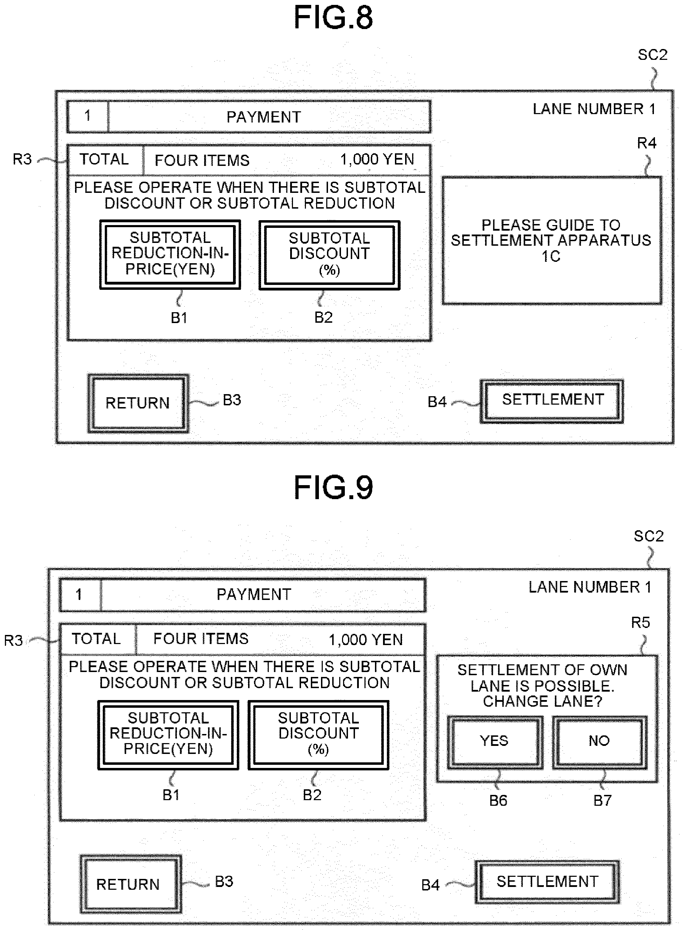

Fig. 8 illustrates an example of the settlement confirmation screen SC2 to which the guide display is performed. This example shows a case in which the response command informing that settlement is acceptable is sent from the settlement apparatus 12-1C arranged in the same checkout lane as this registration apparatus 11. The guide display guides a customer to the settlement apparatus 12-1 C which notifies that the settlement processing can be executed. The guide display is performed in the display area R4. The store clerk 21 who confirms this guide display guides the customer 22 to carry out the settlement on the settlement apparatus 12-1 C in the same checkout lane informed by the guide display. For example, the customer 22 who receives the guidance to the settlement apparatus 12-1C moves to the position at which the settlement apparatus 12-1C is arranged to carry out the settlement.

On the other hand, if receiving the response command informing that the settlement is not acceptable from the settlement apparatus 12 (NO in Act 10), the CPU 11a performs a display indicating that the lane to which the registration apparatus 11 belongs cannot accept the settlement (hereinafter referred to as a settlement unacceptable display) on the settlement confirmation screen SC2 (Act 12).

Fig. 9 illustrates an example of the settlement confirmation screen SC2 in which the settlement unacceptable display is performed. The settlement unacceptable display indicates, for example, that the settlement cannot be carried out with the settlement apparatus 12 arranged in the same checkout lane as this registration apparatus 11 and enables to select the other checkout lane at which the settlement is executed. The settlement unacceptable display is performed in the display area R5. A YES button B6 to be operated if the settlement is carried out at the other checkout lane and a NO button B7 if the settlement is not carried out at the other checkout lane are displayed in the display area R5. The CPU 11a of the registration apparatus 11 acts as a reception module for receiving a selection input of whether the settlement data generated by the generation module is sent to another registration apparatus 11 in cooperation with the touch panel 11f.

The store clerk 21 who confirms the settlement unacceptable display determines whether or not the customer 22 carries out the settlement at the other checkout lane. For example, in a case in which the settlement apparatus 12 at the other checkout lane is in a standby state, the store clerk 21 touches the YES button B6. In a case in which the settlement apparatus 12 at the other checkout lane is in an operation state, the store clerk 21 touches the NO button B7.

The CPU 11a which performs the settlement unacceptable display confirms whether or not the lane change is carried out (Act 13). If the NO button B7 is touched (NO in Act 13), change of the checkout lane is not carried out. In this case, the CPU 11a executes a sending unable processing. In the sending unable processing, for example, a unique identification code is attached to the settlement data to send it to the server, and the printer 11g is activated to issue an accounting receipt on which the barcode representing the identification code is printed. The accounting receipt is handed over to the customer. The customer reads the barcode of the accounting receipt with the scanner 12e of the settlement apparatus 12 prepared, for example, at a location different from the checkout lane. Thus, the CPU 12a of the settlement apparatus 12 acquires the settlement data with the identification code obtained from the barcode from the server. Then, the CPU 12a executes the settlement processing on the basis of the settlement data.

On the contrary, if the YES button B6 is touched (YES in Act 13), change of the checkout lane is executed. In this case, the CPU 11a proceeds to the processing in Act 14. If it is detected that the lane change button B5 is touched in the processing in Act 7 or that the YES button B6 is touched in the processing in Act 13, the CPU 11a proceeds to the processing in Act 14.

In the processing in Act 14, the CPU 11a acquires the changed destination information stored in the changed destination memory M4. Then, the CPU 11a proceeds to the foregoing processing in Act 9. The CPU 11a outputs the settlement data generated in the processing in Act 5 and the changed destination information acquired in the processing in Act 14 to the communication unit 11h. Then, the CPU 11a instructs the communication unit 11h to send the settlement data to the address of another registration apparatus 11 identified by the changed destination information. In response to the instruction described above, a data transmission message of which the sending destination address is filled with the communication address of another registration apparatus 11 identified by the changed destination information and the sending source address is filled with the communication address of this registration apparatus 11 is created in the communication unit 11h to send it on the LAN 13. In this data transmission message, the settlement data is included. This data transmission message is received by one registration apparatus of which the communication address is set to the sending destination address among other registration apparatuses 11 connected with the LAN 13. In other words, the communication unit 11h of the registration apparatus 11 receives a data transmission message of which the sending destination address is the communication address of the registration apparatus 11 among the data transmission messages transmitted on the LAN 13. The CPU 11a of the registration apparatus 11 acts as a third sending module for sending the settlement data to another registration apparatus 11 set as the changed destination in cooperation with the communication unit 11h through the processing in Act 14 and Act 9.

The CPU 11a of the registration apparatus 11 starts the information processing indicated by the procedures shown in the flowchart in Fig. 5 if receiving the data transmission message via the communication unit 11h. Firstly, the CPU 12a acquires the sending destination information stored in the sending destination memory M3 (Act 41). Then, the CPU 11a outputs the settlement data included in the data transmission message and the sending destination information acquired in the processing in Act 41 to the communication unit 11h (Act 42). Then, the CPU 11a instructs the communication unit 11h to send the settlement data and the sending destination information to the address of the settlement apparatus 12 identified by the sending destination information. In response to the instruction described above, a data transmission message of which the sending destination address is filled with the communication address of the settlement apparatus 12 identified by the sending destination information is created in the communication unit 11h to send it on the LAN 13. In this data transmission message, the settlement data and the sending destination information are included. The sending source address of this data transmission message is the sending source address of the data transmission message received via the LAN 13. This data transmission message is received by one settlement apparatus of which the communication address serving as the sending destination address is set in the plurality of the settlement apparatuses 12 connected with the LAN 13. In other words, the communication unit 12h of the settlement apparatus 12 receives a data transmission message of which the sending destination address is the communication address of the settlement apparatus 12 among the data transmission messages transmitted on the LAN 13. The CPU 11a of the registration apparatus 11 acts as a registration side reception module for receiving the settlement data transferred via the network (LAN 13) in cooperation with the communication unit 11h. Further, the CPU 11a acts as a second sending module for sending the settlement data received by the registration side reception module to the settlement apparatus 12 set as the sending destination in cooperation with the communication unit 11h through the processing in Act 41 and Act 42.

The CPU 12a of the settlement apparatus 12 which receives the data transmission message carries out the information processing of the same procedure as shown in the foregoing flowchart in Fig. 4. If the error does not occur in the settlement apparatus 12 and the busy flag is reset to "0", the CPU 12a executes the processing in Act 23 to Act 27. On the contrary, if the error occurs in the settlement apparatus 12 or the busy flag is set to "1", the CPU 12a executes the processing in Act 28, Act 29 and Act 30 or the processing in Act 28, Act 29 and Act 31.

Therefore, the CPU 11a of the registration apparatus 11 which sends the settlement data in the processing in Act 42 of Fig. 5 waits for the response command (Act 43). If receiving the response command informing that the settlement is acceptable via the communication unit 11h (YES in Act 43), the CPU 11a acquires the lane number stored in the lane number memory M1 (Act 44). Then, the CPU 11a instructs the communication unit 11h to reply the lane number and the response command informing that the settlement is acceptable to another registration apparatus which serves as the sending source of the data transmission message received via the LAN 13 (Act 45). In response to the instruction described above, a response command informing that the settlement is acceptable of which the sending destination address is filled with the sending source address of the data transmission message received via the LAN 13 is created in the communication unit 11h to send it on the LAN 13. In this response command, the lane number is included. The sending source address of this response command is the sending source address of the response command received via the LAN 13, that is, the communication address of the settlement apparatus which sends the response command informing that the settlement is acceptable. This response command is received by the registration apparatus 11 of which the communication address is set as the sending destination address. The CPU 11a of the registration apparatus 11 acts as a notification transfer module for transferring a notification to another registration apparatus serving as the sending source of the settlement data if receiving the notification indicating that the settlement processing is possible after the settlement data is sent by the second sending module in cooperation with the communication unit 11h through the processing in Act 41 to Act 45.

The CPU 11a of the registration apparatus 11 which receives the response command informing that the settlement is acceptable including the lane number performs the guide display on the settlement confirmation screen SC2 (Act 11).

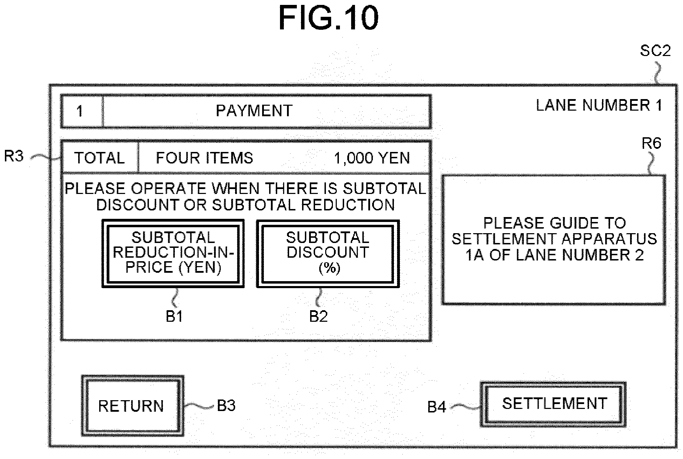

Fig. 10 illustrates an example of the settlement confirmation screen SC2 to which the guide display is performed. This example is a case in which the response command informing that the settlement is acceptable is sent from the settlement apparatus 12-2A arranged at the checkout lane different from that of the registration apparatus 11-1. The guide display guides the customer to the settlement apparatus 12-2A which notifies that the settlement processing is possible. The guide display is performed in the display area R6. The store clerk 21 who confirms this guide display guides the customer 22 to carry out the settlement with the settlement apparatus 12-2A at the other checkout lane informed by the guide display. The CPU 11a acts as an informing module for carrying out an informing operation which guides the customer to the settlement apparatus that carries out a notification if receiving the notification indicating that the settlement processing is possible after the settlement data is sent by the first or third sending module in cooperation with the touch panel 11f.

In the processing in Act 43 of Fig. 5, if receiving the response command informing that the settlement is unacceptable via the communication unit 11h (NO in Act 43), the CPU 11a acquires the changed destination information stored in the changed destination memory M4 (Act 46). Then, the CPU 11a proceeds to the processing in Act 42. The CPU 11a outputs the settlement data included in the data transmission message received via the LAN 13 together with the changed destination information acquired in the processing in Act 46 to the communication unit 11h. Then, the CPU 11a instructs the communication unit 11h to send the settlement data to the address of another registration apparatus 11 identified by the changed destination information. The following operations are as described above, and thus the description thereof is omitted.

In the checkout system 10 shown in Fig. 1, the settlement apparatus 12-1A is set as, for example, the sending destination to the registration apparatus 11-1 of the lane number 1. The settlement apparatus 12-1B is set as, for example, the transfer destination to the settlement apparatus 12-1A, the settlement apparatus 12-1C is set as, for example, the transfer destination to the settlement apparatus 12-1B, and the settlement apparatus 12-1A is set as, for example, the transfer destination to the settlement apparatus 12-1C. Further, the registration apparatus 11-2 of the lane number 2 is set as, for example, the changed destination to the registration apparatus 11-1. The settlement apparatus 12-2A is set as, for example, the sending destination to the registration apparatus 11-2.

In this case, the registration apparatus 11-1 sends the settlement data to the settlement apparatus 12-1A specified by the sending destination information. The settlement data includes the sending destination information for identifying the settlement apparatus 12-1A. In a case in which the settlement apparatus 12-1A cannot execute the settlement of the transaction, the transfer destination information stored in the transfer destination memory M6 of the settlement apparatus 12-1A is not coincident with the sending destination information received together with the settlement data. Therefore, the settlement data is transferred from the settlement apparatus 12-1A to the settlement apparatus 12-1B. The settlement data also includes the sending destination information for identifying the settlement apparatus 12-1A. In a case in which the settlement apparatus 12-1B cannot execute the settlement of the transaction either, the transfer destination information stored in the transfer destination memory M6 of the settlement apparatus 12-1B is not coincident with the sending destination information received together with the settlement data. Therefore, the settlement data is transferred from the settlement apparatus 12-1B to the settlement apparatus 12-1C. The settlement data also includes the sending destination information for identifying the settlement apparatus 12-1A. In a case in which the settlement apparatus 12-1C can execute the settlement of the transaction, the response command informing that the settlement is acceptable is sent from the settlement apparatus 12-1C to the registration apparatus 11-1. The guide display to the settlement apparatus 12-1C is performed on the settlement confirmation screen SC2 in the registration apparatus 11-1 in response to the response command as shown in Fig. 8.

On the other hand, in a case in which the settlement apparatus 12-1C cannot execute the settlement of the transaction either, the transfer destination information stored in the transfer destination memory M6 of the settlement apparatus 12-1C is coincident with the sending destination information received together with the settlement data. Therefore, the response command informing that the settlement is unacceptable is sent from the settlement apparatus 12-1C to the registration apparatus 11-1. The settlement unacceptable display is performed on the settlement confirmation screen SC2 in the registration apparatus 11-1 in response to the command as shown in Fig. 9.

It is assumed that the store clerk 21 touches the YES button B6. In this case, the registration apparatus 11-1 sends the settlement data to another registration apparatus 11-2 specified by the changed destination information. The registration apparatus 11-2 sends the settlement data to the settlement apparatus 12-2A specified by the sending destination information. The settlement data includes the sending destination information for identifying the settlement apparatus 12-2A. In a case in which the settlement apparatus 12-2A can execute the settlement of the transaction, the response command informing that the settlement is acceptable is sent from the settlement apparatus 12-2A to the registration apparatus 11-2. In response to the response command, the registration apparatus 11-2 acquires the lane number from the lane number memory M1. Then, the registration apparatus 11-2 sends the response command, informing that the settlement is acceptable, which includes the lane number to the registration apparatus 11-1. In the registration apparatus 11-1 which receives the response command, informing that the settlement is acceptable, which includes the lane number, the guide display including the lane number is performed as shown in Fig. 10.

In this manner, according to the checkout system 10, it is not required that the registration apparatus 11 selects a settlement apparatus serving as the sending destination of the settlement data for each transaction. Thus, for example, compared with a case in which the store clerk 21 who operates the registration apparatus 11 selects the settlement apparatus 12 serving as the sending destination of the settlement data for each transaction, workload of the store clerk 21 can be reduced. Compared with a structure in which the registration apparatus 11 selects the sending destination of the settlement data for each transaction on the basis of the state of each settlement apparatus 12, processing load of the registration apparatus 11 can be reduced. Furthermore, all the store clerk to do is to guide the customer 22 according to the guide display, and thus a troublesome operation by the store clerk who visually confirms which one of settlement apparatuses 12 can carry out the settlement processing is also eliminated.

In the present embodiment, the lane change button B5 is arranged on the settlement confirmation screen SC2. If the lane change button B5 is touched, the CPU 11a of the registration apparatus 11 acquires the changed destination information set in the changed destination memory M4, and transfers the settlement data to the registration apparatus 11 at the other checkout lane specified by the changed destination information. Therefore, for example, even if at least one of the plurality of the settlement apparatuses 12 arranged at the same checkout lane is in a state capable of carrying out the settlement, it is possible to respond to the request of the customer 22 who wants to carry out the settlement at the other checkout lane.

The present invention is not limited to the embodiment. For example, in the embodiment, the CPU 11a of the registration apparatus 11 which receives the response command informing that the settlement is unacceptable in the processing in Act 10 of Fig. 3 carries out the settlement unacceptable display and waits for whether or not the lane is changed in the processing in Act 12 and Act 13. As another embodiment, the CPU 11a of the registration apparatus 11 which receives the response command informing that the settlement is unacceptable unconditionally proceeds to the processing in Act 14, to acquire the changed destination information and may send the settlement data to another registration apparatus 11 identified by the changed destination information.

The transfer of the registration apparatus 11 and the settlement apparatus 12 is carried out in general in a state in which a program such as the control program is stored in a ROM. However, the present invention is not limited to this. The control program transferred separately from a computer apparatus may be written into a writable storage device included in the computer apparatus in response to an operation of a user. The transfer of the control program is recorded in a removable recording medium or can be carried out by communication via a network. The recording medium can store the program like a CD-ROM and a memory card, and its form is not limited as long as the program can be read by the apparatus. Further, functions obtained by installation or download of the program may be realized in cooperation with an OS (Operating System) inside the apparatus.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A checkout system comprising:
a plurality of registration apparatuses including,
a generation module configured to generate settlement data required for settlement of a transaction on the basis of input data,
a registration side reception module configured to receive the settlement data transferred via the network from another registration apparatus,
a first sending module configured to send the settlement data generated by the generation module to a settlement apparatus set as a sending destination,
a second sending module configured to send the settlement data received by the registration side reception module to the settlement apparatus set as the sending destination, and
a third sending module configured to send the settlement data generated by the generation module to another registration apparatus set as a changed destination; and
a plurality of settlement apparatuses connected with the plurality of the registration apparatuses via a network, including,
a settlement side reception module configured to receive the settlement data transferred via the network, and
a processing module configured to execute a settlement processing on the basis of the settlement data received by the settlement side reception module.

2. The checkout system according to claim 1, wherein
the plurality of the registration apparatuses sends the settlement data to another registration apparatus set as the changed destination by the third sending module if the settlement processing is not executed by the settlement apparatus on the settlement data sent by the first or second sending module.

3. The checkout system according to claim 1 or 2, wherein
the plurality of the registration apparatuses further includes a reception module configured to receive a selection input of whether to send the settlement data generated by the generation module to another registration apparatus, wherein
the settlement data is sent to another registration apparatus set as the changed destination by the third sending module if the reception module receives the selection input indicating the sending of the settlement data.

4. The checkout system according to any one of claims 1 to 3, wherein
the plurality of the settlement apparatuses further includes an acceptable notification module configured to notify the registration apparatus that the settlement processing is possible if the settlement processing of the settlement data received by the settlement side reception module is possible, and
the plurality of the registration apparatuses further includes a notification transfer module configured to transfer a notification to another registration apparatus serving as a sending source of the settlement data if receiving the notification after the settlement data is sent by the second sending module, and
an informing module configured to carry out an informing for guiding a customer to the settlement apparatus which carries out the notification if receiving the notification after the settlement data is sent by the first or third sending module.

5. A registration apparatus, comprising:
a communication module connected with a network to which a plurality of settlement apparatuses for executing a settlement processing on the basis of settlement data is connected;
a generation module configured to generate settlement data required for settlement of a transaction on the basis of input data;
a reception module configured to receive the settlement data transferred from another registration apparatus connected with the network;
a first sending module configured to send the settlement data generated by the generation module to a settlement apparatus set as a sending destination;
a second sending module configured to send the settlement data received by the reception module to the settlement apparatus set as the sending destination; and
a third sending module configured to send the settlement data generated by the generation module to another registration apparatus set as a changed destination.

6. The registration apparatus according to claim 5, wherein
the registration apparatuses sends the settlement data to another registration apparatus set as the changed destination by the third sending module if the settlement processing is not executed by the settlement apparatus on the settlement data sent by the first or second sending module.

7. The registration apparatus according to claim 5 or 6, wherein
the registration apparatuses further includes a reception module configured to receive a selection input of whether to send the settlement data generated by the generation module to another registration apparatus, wherein
the settlement data is sent to another registration apparatus set as the changed destination by the third sending module if the reception module receives the selection input indicating the sending of the settlement data.

8. The registration apparatus according to any one of claims 5 to 7, wherein the plurality of the settlement apparatuses further includes an acceptable notification module configured to notify the registration apparatus that the settlement processing is possible if the settlement processing of the settlement data received by the settlement side reception module is possible, and
the registration apparatuses further includes a notification transfer module configured to transfer a notification to another registration apparatus serving as a sending source of the settlement data if receiving the notification after the settlement data is sent by the second sending module, and
an informing module configured to carry out an informing for guiding a customer to the settlement apparatus which carries out the notification if receiving the notification after the settlement data is sent by the first or third sending module.

9. A method for performing a checkout, comprising the steps of:
- generating, by a generation module, settlement data required for settlement of a transaction on the basis of input data,
- receiving, by a registration side reception module, the settlement data transferred via the network from another registration apparatus,
- sending, by a first sending module, the settlement data generated by the generation module to a settlement apparatus set as a sending destination,
- sending, by a second sending module, the settlement data received by the registration side reception module to the settlement apparatus set as the sending destination, and
- sending, by a third sending module, the settlement data generated by the generation module to another registration apparatus set as a changed destination; and
- receiving, by a settlement side reception module, the settlement data transferred via the network, and
- executing, by a processing module, a settlement processing on the basis of the settlement data received by the settlement side reception module.

10. The method according to claim 9, wherein the sending step comprises sending, by the plurality of the registration apparatuses, the settlement data to another registration apparatus set as the changed destination by the third sending module if the settlement processing is not executed by the settlement apparatus on the settlement data sent by the first or second sending module.

11. The method according to claim 9 or 10, wherein the receiving step comprises receiving, by a reception module, a selection input of whether to send the settlement data generated by the generation module to another registration apparatus, wherein
the settlement data is sent to another registration apparatus set as the changed destination by the third sending module if the reception module receives the selection input indicating the sending of the settlement data.

12. The method according to any one of claims 9 to 11, further comprising a notifying step comprising:
- notifying, by an acceptable notification module, the registration apparatus that the settlement processing is possible if the settlement processing of the settlement data received by the settlement side reception module is possible, and
- transferring, by a notification transfer module, a notification to another registration apparatus serving as a sending source of the settlement data if receiving the notification after the settlement data is sent by the second sending module, and
- carrying out, by an informing module, an informing for guiding a customer to the settlement apparatus which carries out the notification if receiving the notification after the settlement data is sent by the first or third sending module.
